# EUROPEAN PATENT SPECIFICATION

(11) **EP 0 369 547 B1**
(45) Date of publication and mention of the grant of the patent: **08.06.1994**
(21) Application number: 89202885.3
(22) Date of filing: 14.11.1989
(51) Int. Cl.: B65G 59/02, B65G 67/24

(54) **Method and apparatus for unloading stacks of trays**
Verfahren und Apparat zum Entladen von Tablett-Stapeln
Procédé et appareil pour décharger des piles de plateaux

(30) Priority: 14.11.1988 US 270590
(43) Date of publication of application: 23.05.1990
(73) Proprietor: Staalkat B.V., NL-7122 MP Aalten (NL)
(72) Inventor: van der Schoot, Jelle, NL-7121 AL Aalten (NL)
(74) Representative: Smulders, Theodorus A.H.J., Ir.

(56) References cited:
- WO-A-86/07579
- DE-B- 2 020 514

## Description

This invention relates to apparatus for unloading stacks of egg-trays from a wheeled storage container, said container having vertically-disposed sections and a plurality of horizontally-disposed sections connecting said vertical sections and supporting a plurality of horizontally-disposed shelves that are positioned at different levels within said container for holding on each shelf at least three laterally adjacent stacks of trays, which shelves are provided with guide strips to inhibit the incorrect position of a stack of trays, said apparatus comprising
- unloading means for unloading at least one stack of trays from said container
- moving means for moving said unloading means, at least in a horizontal direction;
- positioning means to position the container and/or the unloading means in a correct unloading position relative to each other, at least in the vertical direction.

Such apparatus is known from GB-A- 2,106,070. This prior apparatus is capable of laterally moving a plurality of side-by-side stacks of trays from a shelf of a container to a movable discharge belt by means of a pushing member which pushes the stacks from the back side of the container to the front side thereof and onto a discharge belt disposed at the front side of the container. The container is moved vertically to register a shelf to be unloaded opposite the pushing member and the discharge belt. The shelves are in the form of stack carrying plates having a downwardly turned or bent front edge to reinforce the front of these shelves. Since a stack when pushed by the pushing member may be damaged by this front edge of such a shelf the superadjacent shelf, i.e. the shelf located above the shelf being unloaded, must first be moved upwards, e.g. pivoted so that the front edge moves upwardly, since otherwise the stack to be unloaded could contact the downwardly turned front edge of the superadjacent shelf and interfere with the unloading thereof.

The above apparatus has several drawbacks, the first one being that modifications are required on the containers normally used which containers are provided with angle iron vertical sections. These vertical sections inhibit the pushing member to push the outer stacks out of the container. Further, a vertical movement of the container is required which necessitates an expensive lift that has to be very accurately controlled to register a shelf with the pushing member and the discharge belt. Besides the lifting and lowering movement of a fully loaded container demands too much time, which causes a low capacity of the total system.

It is an object of the present invention to provide an improved apparatus to overcome these drawbacks.
According to the invention there is provided an apparatus of the above described type wherein
- the unloading means is fork-shaped, having at least two prongs, which are capable of being inserted under a lowermost tray of a stack of trays to be unloaded
- the combined positioning/moving means being capable of moving the unloading means in three mutually perpendicular directions, the container being positioned stationary during the unloading thereof, the combined positioning/moving means being controlled in such a way that the unloading means successively make
   (a) a vertical movent adjacent said container in order to position said unloading means just above the level of a first shelf to be unloaded;
   (b) a horizontal movement in the forward direction such as to insert said unloading means under said lowermost tray of the stack to be unloaded;
   (c) a verticalmovement to slightly elevate the stack of trays from the shelf;
   (d) a lateral movement such as to loosen a middle stack of trays from laterally adjacent stacks or to move outer stacks of trays towards the middle of the shelf to avoid interference of a vertical section of said container; and
   (e) a horizontal movement in the backward direction such as to remove said stack of trays from said container.

The unloading of containers, loaded with stacks of egg-trays is substantially improved by arranging the unloading such that a stack of trays is not pushed from a shelf, but is slightly lifted and removed from the front of the shelves by an unloading means which is insertable under the stack of trays. Further, instead of moving the container vertically to register with the pushing means, the present unloading means operates with a container that is stationary during unloading, and the unloading means is moved vertically along the container to the appropriate shelf for unloading.

In a further embodiment of the present invention, the width and possible oblique positioning of a shelf or the container can be determined by lifting means, provided with detecting means such as switch elements or sensors, which lifting means may be temporarily coupled with and cooperates with the unloading means, e.g. the fork. The lifting means can also be used independently of the unloading means to raise a superadjacent shelf to facilitate the unloading of a subadjacent shelf. Such raising of a superadjacent shelf can be effected by magnetically engaging means in the lifting means.

An embodiment of the apparatus according to the invention will be described with reference to the accompanying drawings. In said drawings
Fig. 1 shows a perspective view of a container unloader, omitting a part thereof, namely, the lifting mechanism for the shelves;
Fig. 2 shows a side elevational view of the apparatus showing the lifting mechanism for the shelves,
Fig. 3 shows a diagrammatic top plan view of a part of the apparatus shown in Figs. 1 and 2;
Fig. 4 shows a front elevational view of the apparatus illustrated in Fig. 3;
Figs. 5a and 5b show details of two embodiments of the unloading means used in the apparatus of Figs. 1-4;
Fig. 6 is a top plan view showing a container unloader and a discharge belt; and
Fig. 7 shows a front elevational view of the apparatus shown in Fig. 6.

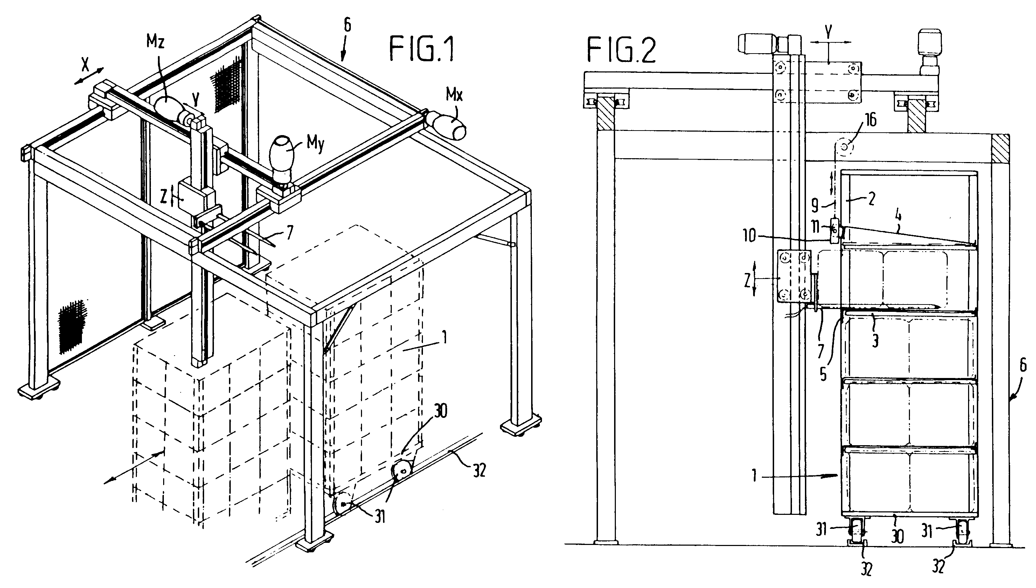

Referring to the drawings, there is shown a container unloader substantially consisting of a manipulator 6 (see Fig. 1), having a stack gripping and moving member 7, shown as a fork, which can move in three essentially perpendicular directions, namely the X, Y and Z directions, indicated by double arrows in Fig. 1. These movements are independent of each other and programmable and controllable by conventional control means (not shown) which operates the three motors Mₓ, M_{y} and M_{z}.

As further shown in the drawings (Fig. 2), each container 1 essentially consists of four vertical sections 2, which in a preferred embodiment are angle sections, and which by means of connecting sections 3 are interconnected. Supported on the connecting sections 3 are stack carrying shelves 4. The angle sections 2 are secured at the lower end to a bottom section 30 mounted on wheels 31, which allows the container to be moved about a factory floor by means of rails 32 and secures the container at a correct position relative to the manipulator 6.

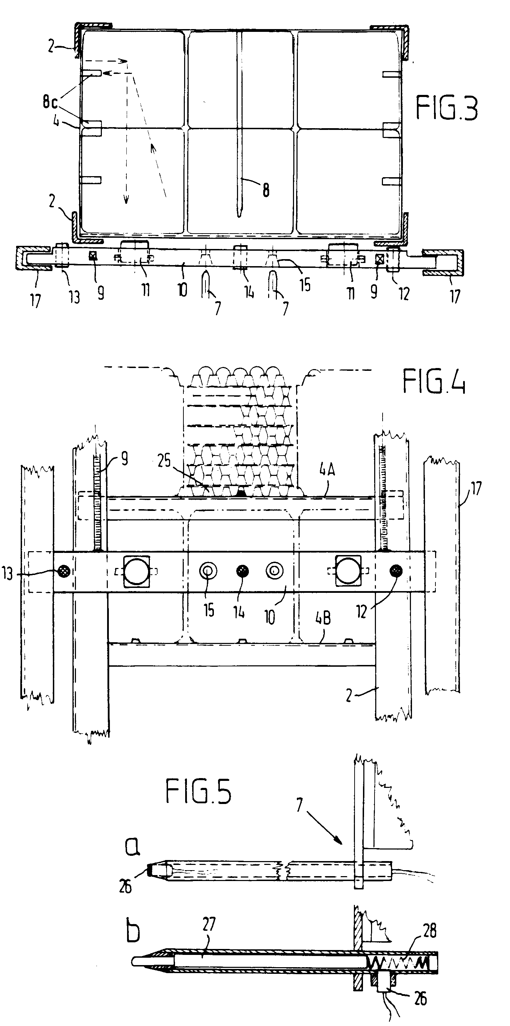

As shown in Figs. 2 and 4, the stack carrying shelves 4 are provided at the front edge with a down turned or downwardly bent edge 5. This edge serves to impart rigidity to the shelves, and at the same time prevents the stacks from being removed from or fall from the container without some positive action by an operator. However, in view of bent edge 5, as will be easily appreciated, in order to remove a stack from the container, the superadjacent shelf, i.e. the shelf located above the stack to be removed, must be lifted, so as to provide a clearance between the edge 5 and the stack to be removed.

The mechanism by which the superadjacent shelf 4 can be lifted consists of two chains 9 (see Fig. 2) and a scanning (or sensing) mechanism (explained in connection with Figs. 3 and 4). The chains are each disposed at the front of a container and connected to chains 9 is a horizontal beam 10 with electromagnets 11 thereon (see Figs. 3 and 4). Beam 10 can be moved up and down in guides 17 by means of a drive mechanism 16 operable with chains 9. By moving beam 10 to a position in front of a shelf edge, actuating the electromagnets to engage the shelf edge, and moving the beam upwardly, the shelf can be lifted. When the subadjacent shelf has been unloaded, the beam will lower the superadjacent shelf to its original positon, release that shelf and be moved to the next shelf to be lifted.

In order to locate a stack of trays and the shelf carrying that stack, use is made of a scanning or sensing mechanism which is fixedly secured to beam 10 (see Figs. 3 and 4). In this regard, beam 10 is provided with proximity switches 12, 13, 14 and holes 15 for permitting the passage of forks 7 which are the unloading means and also the means for actual lifting of a shelf. Beam 10 is moved vertically along the container until the proximity switches 12, 13 and 14 detect the underside of a shelf, e.g. shelf 4a in Fig. 4. A reading of the encoders of the Z-axis determines the position of the underside of shelf 4a. By engaging beam 10 with the forks 7, through holes 15, and moving the forks slightly upwardly, the beam is positioned opposite the shelf edge. The beam 10 is then moved to the left and the right adjacent a shelf edge, and the container width and any container misalignment are sensed and measured on the X-axis by means of the sensing proximity switches 12, 13 and encoders (not shown). By moving beam 10 further upwards, the upper edge of shelf 4a can be found in the same manner. By repeating this procedure for all shelves, the edges of the shelves and the pitches of the shelves (distances between shelves) are also approximately known. Subsequently, the fork or the drive mechanism 16 will move beam 10 to a position intermediate of shelves (a "rest" position) and release it. The beam will remain in the rest position until a superadjacent shelf has been unloaded, as described below, and that shelf is to be lifted for unloading a subadjacent shelf, also as described below.

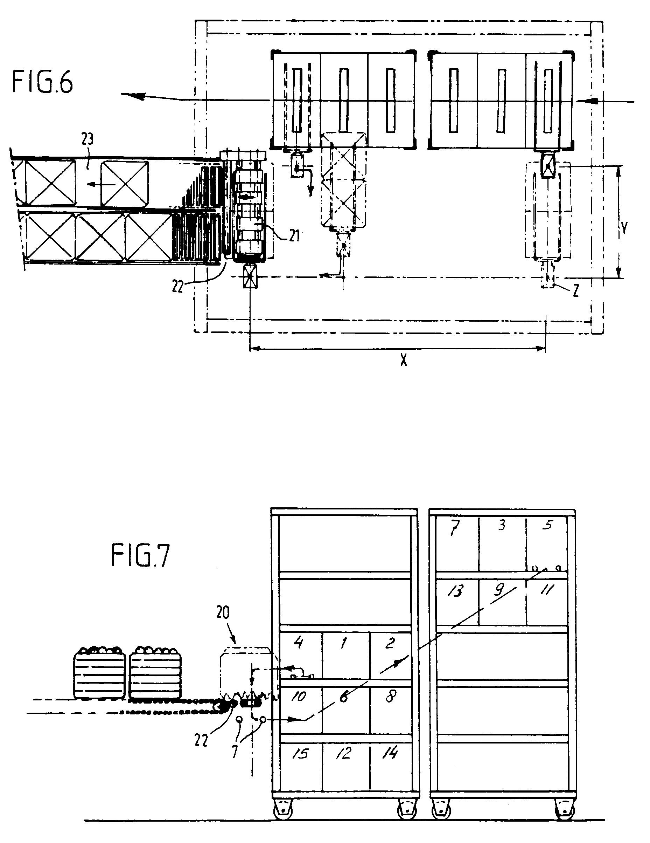

By means of the above-described "coarsely"-determined position of a shelf edge, e.g. the bent edge 5 of the shelf 4a, the apparatus can now find the precise top of a shelf, e.g. shelf 4b, by positioning itself at the determined position below the edge of shelf 4b and then, by moving slowly upwardly, accurately determining the position of the top of shelf 4b by means of a sensor in fork 7 (see Fig. 5), which will be described in more detail hereinafter. By means of the shelf pitch, i.e. the perpendicular distance between the shelves, thus coarsely determined, and the accurate position of the top of shelf 4b being determined, the position of the top of shelf 4a can be approximated.

Referring now to Figs. 6 and 7, there is shown a deposition station 20. Arranged in this station are a set of continuously travelling conveyor belts 21, with one or two slots 22 between them, through which the forks 7 can be lowered to deposit a stack of trays. Immediately after being deposited, the stacks of trays are removed from the deposition station to a discharge or buffer conveyor 23 to clear the deposition station for a next stack of trays.

Turning now to the detailed operation of forks 7, the stacks of trays are slightly lifted from a shelf by means of forks 7, i.e. forks 7 are inserted into conventional tunnel-shaped openings 25 of the lowermost tray of the stack of trays (see Fig. 4), and the stack is slightly lifted for easy removal from the shelf and for clearance from guide strips 8, as described more fully below. As noted hereinbefore, the operation of beam 10 provides an approximate position of the shelf to be unloaded. The forks must then determine the exact position of the upper or top edge of that shelf so that the forks can be accurately placed in openings 25. For this purpose the ends of the fork 7 are provided with a sensor or switch element 26, which is actuated when element 26 touches something. This switch element may be a proximity switch in the end face of the fork (as shown in Fig. 5a) or a spring-urged pin 27 which, when touched by a shelf, is moved against the action of a spring 28 and actuates switch 26 (as shown in Fig. 5b).

Beam 10 will have determined a coarse position of the shelf edge, as explained above, and fork 7 will be set in a position slightly lower than the upper edge of the shelf. When the fork 7 is moved in the direction of the shelf edge, the fork ends contact the front of the edge of the shelf and thus detect the shelf by means or sensor 26 or pins 27. In view of the width (height) of the bent edge 5 of the shelf, this positioning of the fork need not be too accurate. Thereafter, the fork is moved upwardly (vertically in the Z-direction) until the shelf edge is no longer detected. The fork is now just above the shelf. The fork is then moved in the direction of the stack (in the Z-direction) and thus comes to lie underneath the stacks of trays and in openings 25. The stacks are subsequently slightly lifted so as to clear the guide strip or strips 8 (see Fig. 3) on the shelves. When it is the middle stack which is to be removed, a to-and-fro lateral movement of the fork is made to push the adjacent outer stacks of trays gently aside, so the stacks can be taken from the shelf and out of the container without interference from the other adjacent outer stacks of trays of the three adjacent stacks of trays. When the outer stacks of trays are to be removed, each stack is moved toward the middle of the shelf to avoid interference with the angle sections 2.

The fork 7, carrying a stack of trays, is then moved horizontally backwards to move the stack of trays out of the container, and then is moved to a "rest" position, if necessary, to await the deposition station 20 being cleared. If the deposition station is cleared, the fork will go directly to the deposition station.

When the stack has been placed on the deposition station, the fork will be moved downwards in a continuous movement and thence by the shortest route to a next stack of trays.

The above describes the operation of the various elements of the invention, and the following will describe the cooperation of those elements. One or more containers 1 are wheeled in tracks 32 to the manipulator 6 and positioned opposite fork 7 (see Fig. 1). Of course, container 1 may be wheeled to such positions by automatic motive means, as is common in modern factories. Drive mechanism 16 is actuated to move beam 10 until proximity switches 12, 13 and 14 detect a shelf, e.g. shelf 4a in Fig. 4. By moving beam 10 vertically in guides 17, proximity switches 12, 13 and 14 will detect the presence and pitch of each shelf (distance between shelves), as explained above and further discussed below. With this "coarsely"-determined position of each shelf edge, a shelf for unloading of the stacks of trays may be selected. If each shelf of the container is loaded with stacks of trays, then the uppermost shelf of the container will be selected for first unloading.

More specifically, after beam 10 is moved to a shelf, and that shelf is detected by proximity switches 12, 13 and 14, forks 7 are moved into holes 15, and beam 10 is moved laterally, to-and-fro, in guides 17 so that proximity switches 12 and 13 can determine the width of the shelves and any misalignment (see Fig. 3). The center of the shelf will also be determined in this movement of beam 10, so that forks 7 are positioned in the center of the middle stack of trays on the shelf. The forks 7 are then slightly retracted and beam 10 is moved to a rest position, i.e. a position away from the shelf being unloaded. These movements are, of course, controlled by conventional control means, e.g. a computer and the like.

At this point, forks 7 are in a position to determine the top of a shelf on which the underside of the lowermost tray of the middle stack of trays on the shelf to be unloaded, and the control means controls the movement of the fork (the unloading means), such that the fork is movable vertically adjacent the shelf of the container so as to place the forks at the top of the first shelf to be unloaded. This is achieved by sensors 26 (see Fig. 5) and forks 7. As explained above, these sensors contact the bent edge 5 (see Fig. 2) of the shelf to be unloaded, and when that contact is determined, the forks are moved slowly upwardly, until the sensors 26 no longer detect the shelf edge. Therefore, the forks are just at the top of the first shelf to be unloaded.

The control means then moves the forks horizontally forward so as to insert the forks under the lowermost tray of the middle stack of trays, i.e. openins 25 (see Fig. 4) and then elevate the forks slightly, i.e. that the stack of trays clears guide strip 8, see Fig. 3. The control means then laterally moves the forks, i.e. to-and-fro, to loosen the middle stack of trays from the adjacent stacks of trays so that the middle stack of trays is removable without interference from the other stacks of trays of the three adjacent stacks of trays (see Fig. 4).

There may be a guide strip 8 in each of the three adjacent stacks of trays, for correct positioning thereof, but as described hereinafter, only one such guide strip 8, as shown in Fig. 3, is necessary.

The control means then moves the forks horizontally backwards, i.e. away from the container, to remove the middle stack of trays from the container. The removed stack of trays is then moved to the deposition station 20 (see Fig. 7), as described above.

Thereafter, the fork is moved back to that shelf and positioned in front of one of the other stacks of trays on the shelf. After the forks are positioned under that stack of trays, the stack of trays is moved by the fork slightly inwardly to clear angle sections 2 (see Fig. 3) and then removed from the shelf and taken to the deposition station, in the same manner as described above. The remaining stack of trays is likewise removed from the shelf.

Fig. 3 illustrates an alternate embodiment to that of the above described operation. As can be seen from Fig. 3, only one guide strip 8 is used for accurately positioning the middle stack of trays on the shelf. In this arrangement, instead of having three parallel guide strips 8, i.e. one for each set of stacks of trays, there is only one central guide strip 8, i.e. for the middle stack of trays, and transverse short guide ribs 8a for positioning the outer stacks of trays (see Fig. 3). These guide ribs extend at right angles to the central guide strip 8 and extend from the sides of the shelf which are parallel to the central guide strip 8, as shown in Fig. 3. These transverse short guide ribs will fit under conventional openings in the lowermost tray of a stack of trays, which conventional openings are similar to those shown as 25 in Fig. 4.

With this arrangement, there is no need for raising the stack of trays as high as described above in connection with unloading stacks of trays where there are three parallel guide strips 8. The outer stacks of trays only need be raised high enough to clear shelf 4, as the short ribs 8a are in the direction of the first stack movement, while at the same time, the short ribs 8a will ensure correct positioning of the stacks of trays when the stacks are placed on the shelves. As shown by the arrows in Fig. 3, the forks 7 will remove the outer stack of trays by moving laterally inwardly so as to position an outer stack of trays such that it clears angle section 2, and short ribs 8a, and then simply remove the stack of trays by horizontally moving the fork with the stack of trays backwardly out of the container. The stack of trays may also be loaded onto the shelf, as shown by the arrows in Fig. 3 by moving the stack of trays into the shelf and positioning the stack of trays on a short rib 8a.

As noted above, manipulator 6 can accommodate and unload two or more containers, alternately, in accordance with a predetermined program. This is shown by way of example in Fig. 7, in which stacks have been removed from the position designated by 4 in the left-hand container, and deposited on deposition station 20, whereafter the fork 7 moves from below the deposition station to position 5 of the right-hand container to remove a stack of trays. There is thus created the ability of mixing lots of different articles, e.g. lots of small, medium and large eggs, which is often desirable with sorting and packing plants, because eggs from a given farm will often fall in the same size class, which will result in overloading of this class during further processing, e.g. packaging. By mixing eggs from different farms, which belong to different classes, the sorting and packaging equipment can be uniformly loaded for efficient operation thereof.

Normally a container has on each shelf 6 stacks, i.e. three in front and three behind the first stacks, i.e. that there are always two stacks behind each other on every two fork prongs.

## Claims

1. Apparatus for unloading stacks of egg-trays from a wheeled storage container, said container having vertically-disposed sections (2) and a plurality of horizontally-disposed sections (3) connecting said vertical sections (2) and supporting a plurality of horizontally-disposed shelves (4) that are positioned at different levels within said container (1) for holding on each shelf (4) at least three laterally adjacent stacks of trays, which shelves (4) are provided with guide strips (8) to inhibit the incorrect position of a stack of trays, said apparatus comprising
- unloading means (7) for unloading at least one stack of trays from said container (1)
- moving means (6) for moving said unloading means (7) at least in a horizontal direction;
- positioning means (6) to position the container (1) and/or the unloading means (7) in a correct unloading position relative to each other, at least in the vertical direction,
characterized in that
- the unloading means (7) is fork-shaped, having at least two prongs, which are capable of being inserted under a lowermost tray of a stack of trays to be unloaded
- the combined positioning/moving means (6) being capable of moving the unloading means (7) in three mutually perpendicular directions (X,Y,Z), the container (1) being positioned stationary during the unloading thereof, the combined positioning/moving means (6) being controlled in such a way that the unloading means (7) successively make
(a) a vertical movement (Z) adjacent said container (1) in order to position said unloading means (7) just above the level of a first shelf (4) to be unloaded;
(b) a horizontal movement (Y) in the forward direction such as to insert said unloading means (7) under said lowermost tray of the stack to be unloaded;
(c) a vertical movement (Z) to slightly elevate the stack of trays from the shelf (4);
(d) a lateral movement (X) such as to loosen a middle stack of trays from laterally adjacent stacks or to move outer stacks of trays towards the middle of the shelf to avoid interference of a vertical section (2) of said container (1); and
(e) a horizontal movement (Y) in the backward direction such as to remove said stack of trays from said container (1).

2. Apparatus according to claim 1, said apparatus further comprising shelf lifting means (10) for lifting a next above shelf (4) upwardly in order to provide clearance between said shelf (4) and the shelf to be unloaded
characterized in that
said lifting means (10) is laterally movable and is provided with detecting means (12, 13) disposed near each end thereof in order to determine the width of said container (1).

3. Apparatus according to claim 2, characterized in that the unloading means (7) is engageable with said lifting means (10) in order to move said lifting means (10) laterally.

4. Apparatus according to claim 2, characterized in that said detecting means (12, 13) are proximity switches.

5. Apparatus according to claim 2, characterized in that said lifting means (10) is provided with electromagnets (11), which are contactable with a downwardly bent front edge (5) of a shelf (4) to be lifted.

6. Apparatus according to claim 2-3, characterized in that said lifting means (10) is in the form of a beam having apertures (15) for receiving the prongs of the unloading means (7).

7. Apparatus according to at least one of the claims 1-6, characterized in that the ends of the prongs of the unloading means (7) have sensing means (26, 27), which are contactable with said downwardly bent front edge (5) in order to determine that the ends of the prongs have cleared the upper edge of the shelf (4) to be unloaded and are correctly positioned for being inserted under said lowermost tray.

## Patentansprüche

1. Apparat zum Entladen von Eiertablett-Stapeln aus einem mit Rädern versehenen Vorratsbehälter, der senkrecht angeordnete Profile (2) und mehrere waagerecht angeordnete Profile (3) aufweist, die die senkrechten Profile (2) miteinander verbinden und auf denen mehrere waagerecht angeordnete Tragplatten (4) ruhen, die auf verschiedenen Niveaus im Behälter (1) angebracht sind, um auf jeder Tragplatte (4) mindestens drei seitlich angrenzende Tablett-Stapel zu fassen, welche Tragplatten (4) mit Führungsstreifen (8) versehen sind, um eine unrichtige Stellung eines Tablett-Stapels zu verhindern,
wobei der Apparat enthält:
- ein Entlademittel (7) zum Entladen mindestens eines Tablett-Stapels aus dem Behälter (1),
- ein Bewegungsmittel (6) zum Bewegen des Entlademittels (7) mindestens in einer waagerechten Richtung und
- ein Einstellmittel (6) zum Bringen des Behälters (1) und/oder des Entlademittels (7) in eine richtige Entladestellung relativ zueinander, mindestens in der senkrechten Richtung,
dadurch gekennzeichnet, daß
- das Entlademittel (7) gabelförmig ist und mindestens zwei Zinken aufweist, die unter ein unterstes Tablett eines zu entladenden Tablett-Stapels geschoben werden kann,
- das kombinierte Einstell-/Bewegungsmittel (6) das Entlademittel (7) in drei gegenseitig senkrechten Richtungen (X,Y,Z) bewegen kann, wobei der Behälter (1) während dessen Entladung ortsfest eingestellt ist, und das kombinierte Einstell-/Bewegungsmittel (6) so gesteuert wird, daß das Entlademittel (7) nacheinander ausführt:
(a) eine senkrechte Bewegung (Z) nahe dem Behälter (1), um das Entlademittel (7) gerade oberhalb einer ersten zu entladenden Tragplatte (4) einzustellen,
(b) eine waagerechte Bewegung (Y) in der Vorwärtsrichtung, um das Entlademittel (7) unter das unterste Tablett des zu entladenden Stapels zu schieben,
(c) eine senkrechte Bewegung (Z), um den Tablett-Stapel ein wenig von der Tragplatte (4) anzuheben,
(d) eine seitliche Bewegung (X), um einen mittleren Tablett-Stapel von seitlich angrenzenden Stapeln zu trennen oder äußere Tablett-Stapel zur Mitte der Tragplatte zu bewegen, um zu vermeiden, daß ein senkrechtes Profil (2) des Behälters (1) behindert wird und
(e) eine waagerechte Bewegung (Y) in der Rückwärtsrichtung, um den Tablett-Stapel aus dem Behälter (1) zu entfernen.

2. Apparat nach Anspruch 1, wobei der Apparat weiter Tragplatten-Hebemittel (10) enthält, um eine nächsthöhere Tragplatte (4) anzuheben, um einen Zwischenraum zwischen der Tragplatte (4) und der zu entladenden Tragplatte zu schaffen, dadurch gekennzeichnet, daß das Hebemittel (10) seitwärts bewegbar ist und nahe jedem seiner Enden mit einem Anzeigemittel (12, 13) versehen ist, um die Breite des Behälters (1) zu ermitteln.

3. Apparat nach Anspruch 2, dadurch gekennzeichnet, daß das Entlademittel (7) mit dem Hebemittel (10) kuppelbar ist, um das Hebemittel (10) seitwärts zu bewegen.

4. Apparat nach Anspruch 2, dadurch gekennzeichnet, daß die Anzeigemittel (12, 13) Annäherungsschalter sind.

5. Apparat nach Anspruch 2, dadurch gekennzeichnet, daß das Hebemittel (10) mit Elektromagneten (11) versehen ist, die mit einem abwärts gebogenen Vorderrand (5) einer zu hebenden Tragplatte (4) in Kontakt gebracht werden können.

6. Apparat nach Anspruch 2-3, dadurch gekennzeichnet, daß das Hebemittel (10) die Form eines Balkens aufweist, der mit Öffnungen (15) zum Aufnehmen der Zinken des Entlademittels (7) versehen ist.

7. Apparat nach mindestens einem der Ansprüche 1-6, dadurch gekennzeichnet, daß die Enden der Zinken des Entlademittels (7) Abtastmittel (26, 27) aufweisen, die mit einem abwärts gebogenen Vorderrand (5) in Kontakt gebracht werden können, um festzustellen, daß die Enden der Zinken den oberen Rand der zu entladenden Tragplatte (4) freigegeben haben und in die richtige Stellung gebracht sind, um unter das unterste Tablett geschoben zu werden.

## Revendications

1. Appareil de déchargement de piles de plateaux à oeufs hors d'un conteneur sur roues de conservation, ledit conteneur présentant des tronçons (2) disposés verticalement et une pluralité de tronçons (3) disposés horizontalement et soutenant une pluralité d'étagères (4) disposées horizontalement, qui sont positionnées à différents niveaux dans ledit conteneur (1) pour maintenir sur chaque étagère (4) au moins trois piles de plateaux adjacentes latéralement, ces étagères (4) étant dotées de bandes de guidage (8) pour empêcher le positionnement incorrect d'une pile de plateaux, ledit appareil comportant:
- un moyen de déchargement (7) pour décharger au moins une pile de plateaux dudit conteneur (1);
- moyen de déplacement (6) pour déplacer ledit moyen de déchargement (7) au moins dans une direction horizontale;
- un moyen de positionnement (6) pour positionner le conteneur (1) et/ou le moyen de déchargement (7) dans une position mutuelle correcte de déchargement, au moins dans la direction verticale,
caractérisé en ce que
- le moyen de déchargement (7) est en forme de fourche présentant au moins deux dents susceptibles d'être insérées en dessous du plateau le plus bas d'une pile de plateaux à décharger,
- le moyen combiné de positionnement et de déplacement (6) est susceptible de déplacer le moyen de déchargement (7) dans trois directions (X, Y, Z) mutuellement perpendiculaires, le conteneur (1) étant maintenu stationnaire pendant son déchargement, le moyen combiné de positionnement et de déplacement (6) étant contrôlé de telle sorte que le moyen de déchargement (7) effectue successivement:
(a) un déplacement vertical (Z) adjacent audit conteneur (1), de manière à positionner ledit moyen de déchargement (7) juste au-dessus du niveau d'une première étagère (4) à décharger;
(b) un déplacement horizontal (Y) dans la direction avant, de manière à insérer ledit moyen de déchargement (7) en dessous du plateau le plus bas de la pile à décharger;
(c) un déplacement vertical (Z), de manière à soulever légèrement la pile de plateaux de l'étagère;
(d) un déplacement latéral (X) de manière à libérer une pile médiane de plateaux de piles latéralement adjacentes ou à déplacer des piles extérieures de plateaux vers le milieu de l'étagère, pour éviter une interférence avec un tronçon vertical dudit conteneur (1); et
(e) un déplacement horizontal (Y) dans la direction arrière, de manière à enlever ladite pile de plateaux dudit conteneur (1).

2. Appareil selon la revendication 1, ledit appareil comportant en outre un moyen de levage d'étagère (10) pour lever une étagère (4) immédiatement supérieure vers le haut, pour fournir un espace libre entre ladite étagère (4) et l'étagère a décharger,
caractérisé en ce que
ledit moyen de levage (10) est déplaçable latéralement et est doté de moyens de détection (12, 13) disposés à proximité de chacune de ses extrémités, en vue de détecter la largeur dudit conteneur (1).

3. Appareil selon la revendication 2, caractérisé en ce que le moyen de déchargement (7) peut s'accrocher audit moyen de levage (10) pour déplacer latéralement ledit moyen de levage (10).

4. Appareil selon la revendication 2, caractérisé en ce que lesdits moyens de détection (12, 13) sont des contacteurs de proximité.

5. Appareil selon la revendication 2, caractérisé en ce que ledit moyen de levage (10) est doté d'électro-aimants (11) qui peuvent entrer en contact avec un bord frontal (5), replié vers le bas, d'une étagère (4) à lever.

6. Appareil selon la revendication 2-3, caractérisé en ce que ledit moyen de levage (10) présente la forme d'une poutre présentant des ouvertures (15) de réception des dents du moyen de déchargement (7).

7. Appareil selon au moins l'une des revendications 1-6, caractérisé en ce que les extrémités des dents du moyen de déchargement (7) présentent des moyens de détection (26, 27) qui peuvent entrer en contact avec ledit bord frontal (5) replié vers le bas, pour déterminer si les extrémités des dents ont quitté le bord supérieur de l'étagère (4) et sont correctement positionnés pour être insérés en dessous dudit plateau situé le plus bas.
